# EUROPÄISCHE PATENTANMELDUNG

(11) **EP 2 500 404 A1**
(43) Veröffentlichungstag der Anmeldung: **19.09.2012**
(21) Anmeldenummer: 12159335.4
(22) Anmeldetag: 13.03.2012
(51) Int. Cl.: C10L 5/14, C10L 5/20, C10L 5/22

(54) **Verfahren zum Herstellen von Brennstoffformkörpern**

(30) Priorität: 16.03.2011 DE 102011014069
(71) Anmelder: RWE Power AG, 45128 Essen (DE)
(72) Erfinder: Erken, Manfred, 50129 Bergheim (DE); Lange, Raimund, 50259 Pulheim (DE); Lehmann, Bastian, 09599 Freiberg (DE); Wollenberg, Ralf, 09618 Brand-Erbisdorf (DE); Repke, Jens-Uwe, 12621 Berlin (DE); Schröder, Hans-Werner, 09599 Freiberg (DE); Trommer, Dietmar, 09599 Freiberg (DE)
(74) Vertreter: Heine, Christian Klaus

(57) **Zusammenfassung**

Das erfindungsgemäße Verfahren zum Herstellen von Brennstoffformkörpern, umfasst die folgenden Schritte:
a. Trockenmischen einer ersten Menge eines ersten Brennstoffs (2) mit einem Bindemittel (3) zur Erstellung einer Vormischung (5);
b. Zugeben einer ersten Menge Wasser (4) zur Befeuchtung der Vormischung (5);
c. Mischen der befeuchteten Vormischung (5) bei gleichzeitiger Zugabe eines zweiten Brennstoffs (6), bis eine zweite Menge des zweiten Brennstoffs (6) zugegeben wurde zur Erstellung einer Endmischung (7); und
d. Pressen der befeuchteten Endmischung (7) zu Brennstoffformkörpern.

Das erfindungsgemäße Verfahren eignet sich zur Herstellung von Festbrennstoffformkörpern auch aus grundsätzlich nach herrschender Meinung schlecht brikettierbaren Materialien. Durch die Zugabe eines geringen Bindemittelanteils unter Anwendung eines speziellen Mischregimes können Brennstoffformkörper oder Briketts erzeugt werden, die auch bei Einsatz einer Walzenpresse (8) lager- und transportfähig sind.

## Beschreibung

Gegenstand der vorliegenden Erfindung ist ein Verfahren zum Herstellen von Brennstoffformkörpern wie beispielsweise Briketts. Besonders bevorzugt ist der Einsatz des erfindungsgemäßen Verfahrens zur Herstellung von Briketts aus Braunkohle oder umfassend Braunkohle und mindestens einen anderen Brennstoff.

Aufgrund der natürlichen Bindefähigkeit von Braunkohle können Brennstoffformkörper aus Braunkohle aus dem Stand der Technik bekannt bindemittelfrei hergestellt werden. Hierzu wird getrocknete und zerkleinerte Braunkohle unter Druck in eine Form gepresst. Üblicherweise werden hierzu Stempelpressen eingesetzt, da es sich herausgestellt hat, dass mit Walzenpressen aufgrund der nahezu linienartigen und damit kurzzeitigen Verpressung keine dauerhaltbaren Brennstoffformkörper erzeugt werden können. Weiterhin besteht am Markt das Bedürfnis nach Brennstoffformkörpern, die an bestimmte Situationen angepasst sind und die insbesondere aus mehreren unterschiedlichen Brennstoffarten aufgebaut sind. Auch hier ergab sich bisher das Problem, dass es nicht möglich war, dauerhaltbare, lager- und transportfähige Brennstoffformkörper herzustellen. Diese nahmen üblicherweise in großem Umfang bei Transport und Lagerung Schaden.

Hiervon ausgehend liegt der vorliegenden Erfindung die Aufgabe zugrunde, ein Verfahren zum Herstellen von Brennstoffformkörpern anzugeben, bei dem die aus dem Stand der Technik bekannten Nachteile zumindest teilweise überwunden werden.

Diese Aufgabe wird gelöst durch ein Verfahren mit den Merkmalen des unabhängigen Anspruchs, abhängige Ansprüche sind auf vorteilhafte Weiterbildungen gerichtet.

Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Verfahren zum Herstellen von Brennstoffformkörpern umfasst die folgenden Schritte:
a. Trockenmischen einer ersten Menge eines ersten Brennstoffs mit einem Bindemittel zur Erstellung einer Vormischung;
b. Zugeben einer ersten Menge Wasser zur Befeuchtung der Vormischung;
c. Mischen der befeuchteten Vormischung bei gleichzeitiger Zugabe eines zweiten Brennstoffs, bis eine zweite Menge des zweiten Brennstoffs zugegeben wurde zur Erstellung einer Endmischung; und
d. Pressen der befeuchteten Endmischung zu Brennstoffformkörpern.

Unter dem Begriff Trockenmischen wird verstanden, dass der erste Brennstoff und das Bindemittel ohne Zugabe von Wasser miteinander gemischt werden. Das Bindemittel liegt vorzugsweise in Pulverform und/oder in quellbarer Form vor. Das Zugeben der ersten Menge Wasser in Schritt b. erfolgt bevorzugt während der Mischung des ersten Brennstoffs mit dem Bindemittel. Das Wasser wird bevorzugt in Tropfenform und besonders bevorzugt mit einer mittleren Tropfengröße im Bereich von weniger als 10 µm, besonders bevorzugt weniger als 5 µm und besonders bevorzugt im Bereich von etwa 1 µm zugegeben. Durch eine fein dosierte Zugabe des Wassers kommt es zu einer gleichmäßigen Vermischung des Wassers mit Bindemittel und erstem Brennstoff und damit zu einer relativ homogenen Vormischung. Die erste Menge Wasser führt zu einem Vorquellen des Bindemittels und allgemein zu einer Anlagerung des Bindemittels an den ersten Brennstoff. Unter weiterer Mischung wird in Schritt c. ein zweiter Brennstoff zugegeben, bis insgesamt eine zweite Menge des zweiten Brennstoffs zugegeben wurde. Hier erfolgt die Zugabe des zweiten Brennstoffs so langsam, also in so geringer Menge, dass es zu einer gleichmäßigen Durchmischung und zu einer im Wesentlichen homogenen Endmischung kommt. Fakultativ wird danach eine zweite Menge Wasser zur Endmischung zuzugeben. Diese führt zum weiteren Quellen des Bindemittels und damit zur Vorbereitung einer festen Verbindung zwischen den einzelnen Brennstoffgranuli in Schritt d., dem Pressen der befeuchteten Endmischung.

Bevorzugt ist eine Ausgestaltung, bei der bis zum Schritt d. rieselfähige Mischungen vorliegen. Es wird also gerade eine so große erste Menge Wasser und fakultativ eine zweite Menge Wasser zuzugeben, dass sowohl die befeuchtete Vormischung als auch die befeuchtete Endmischung rieselfähig bleiben.

Die Bestimmung der ersten Menge Wassers und fakultativ der zweiten Menge kann auch in Abhängigkeit vom Wassergehalt der Endmischung und/oder der Brennstoffformkörper erfolgen. Hierbei kann die erste und fakultativ die zweite Menge in Abhängigkeit vom Wassergehalt des ersten und/oder des zweiten Brennstoffs bestimmt werden, so dass eine gute Bindungswirkung erzeugt wird und gleichzeitig auf ein Nachtrocknen des Brennstoffformkörpers verzichtet werden kann.

Die Vorgabe der ersten Menge Wasser und fakultativ der zweiten Menge Wasser erfolgt dabei unter Berücksichtigung der Art des eingesetzten Bindemittels, der Menge des eingesetzten Bindemittels und der Menge, der Oberfläche und/oder des Wassergehalts des ersten und/oder zweiten Brennstoffs, sowie des Wassergehalts der Brennstoffformkörper nach Schritt d.. Die Menge des zugesetzten Bindemittels wird unter Berücksichtigung der Menge des ersten und zweiten Brennstoffs und der Oberfläche des ersten und zweiten Brennstoffs bestimmt.

Das erfindungsgemäße Verfahren erlaubt es, sowohl aus einem einzigen Brennstoff (das heißt erster und zweiter Brennstoff sind identisch) lager- und transportstabile Brennstoffformkörper auch in Walzenpressen herzustellen als auch die Herstellung von Brennstoffformkörpern aus unterschiedlichen Brennstoffen. Es ist insbesondere mit dem erfindungsgemäßen Verfahren möglich, Briketts aus Braunkohle in einer Walzenpresse herzustellen und Mischbriketts aus Braunkohle und beispielsweise Anthrazit oder Holz sowohl in Stempel- als auch im Walzenpressen herzustellen. Das erfindungsgemäße Verfahren eignet sich daher insbesondere zur Erhöhung des Durchsatzes der zu erstellenden Briketts, da üblicherweise mit Walzenpressen ein höherer Durchsatz erreicht werden kann.

Gemäß einer vorteilhaften Ausgestaltung des erfindungsgemäßen Verfahrens wird nach Schritt 1.c und vor Schritt 1.d eine zweite Menge Wasser zur Befeuchtung der Endmischung zugegeben.

Dies erlaubt eine weitere Erhöhung des Wassergehalts der Brennstoffformkörper und/oder eine weitere Erhöhung der Bindekraft, in Abhängigkeit von den eingesetzten ersten und zweiten Brennstoffen.

Gemäß einer vorteilhaften Ausgestaltung des Verfahrens wird Schritt 1.d in einer der folgenden Pressen ausgeführt:
A. einer Stempelpresse und
B. einer Walzenpresse.

Der Einsatz einer Stempelpresse erlaubt durch das lange Einwirken von Druck beim Pressen der Brennstoffformkörper die Herstellung lagerstabiler Briketts bei sehr geringem Bindemitteleinsatz. Durch den verstärkten Einsatz von Bindemitteln und insbesondere durch den Einsatz einer auf den Einsatz einer Walzenpresse angepassten Menge von Bindemitteln können Brennstoffformkörper auch aus Braunkohle oder umfassend Braunkohle in Walzenpressen hergestellt werden. Die entstehenden Briketts sind lager- und transportstabil.

Gemäß einer weiteren vorteilhaften Ausgestaltung des erfindungsgemäßen Verfahrens umfasst der erste Brennstoff mindestens einen der folgenden Stoffe:
I. Holz;
II. Steinkohle;
III. Anthrazit;
IV. Braunkohle;
V. Xylit;
VI. pflanzliche Fasern;
VII. Holzkohle;
VIII. Feinkoks aus Steinkohle und Braunkohle;
IX. Schwelkoks aus Steinkohle und Braunkohle

Die Herstellung von Brennstoffformkörpern aus zwei unterschiedlichen Brennstoffen erlaubt es, Brennstoffformkörper herzustellen, die unterschiedlichen Anforderungen genügen. So haben höher inkohlte Festbrennstoffe wie z. B. Steinkohlen einen hohen Heizwert, haben aber ein schlechtes Zündverhalten, was sich negativ auf den thermischen Wirkungsgrad und die Schadstoffemission auswirkt. Niedriger inkohlte fossile Brennstoffe zünden und verbrennen im Regelfall schneller, haben aber einen niedrigeren Heizwert. So kann durch Kombination zweier unterschiedlicher Brennstoffe in einem Brennstoffformkörper erreicht werden, dass die Brennstoffformkörper eigentlich zunächst unvereinbare Eigenschaften aufweisen, also beispielsweise relativ schnell zünden aber einen hohen Heizwert haben.

Zudem ist der Einsatz von Xylit, pflanzlichen Fasern oder Holzkohle aus Umweltgesichtspunkten vorteilhaft. Insbesondere der Einsatz von pflanzlichen Fasern ist in dieser Hinsicht vorteilhaft. Hierunter werden beispielsweise Stroh, Flachs und ähnliches verstanden. Der Einsatz von Feinkoks und Schwelkoks hat sich als vorteilhaft erwiesen.

Gemäß einer weiteren vorteilhaften Ausgestaltung des erfindungsgemäßen Verfahrens umfasst der zweite Brennstoff Braunkohle..

Braunkohle ist leicht verfügbar, sie lässt sich einfach brikettieren und hat gute Heizwerte. Zudem bindet sie aufgrund der der Braunkohle eigenen Bindekraft gut, so dass haltbare Brennstoffformkörper erzeugt werden können.

Es ist auch bevorzugt, im Rahmen der vorliegenden Erfindung Brennstoffformkörper aus Braunkohle herzustellen, das heißt das erfindungsgemäße Verfahren so einzusetzen, dass als erster und als zweiter Brennstoff Braunkohle eingesetzt werden. So können Braunkohlenbriketts auf Walzenpressen hergestellt werden, die lager- und transportstabil sind.

Gemäß einer weiteren vorteilhaften Ausgestaltung des erfindungsgemäßen Verfahrens sind der erste und der zweite Brennstoff identisch.

Es ist auch möglich, Pressen in Schritt 1.d. einzusetzen, die aufgrund der Kürze der Zeit, in der die Verpressung stattfindet, wie beispielsweise Walzenpressen, sonst nicht zum Herstellen von entsprechenden Brennstoffformkörpern eingesetzt werden können.

Gemäß einer weiteren vorteilhaften Ausgestaltung des erfindungsgemäßen Verfahrens umfasst das Bindemittel mindestens einen der folgenden Stoffe:
i. Stärke;
ii. Melasse;
iii. Zellleim;
iv. Sulfitablauge; und
v. organische Bindemittel.

Unter Stärke wird ein Polysaccharid, insbesondere mit der Formel (C₆H₁₀O₅)ₙ verstanden, welches aus Glukose-Einheiten, insbesondere aus α-D-Glukose-Einheiten besteht. Unter Melasse wird ein Zuckersirup verstanden, der Zucker wie beispielsweise Saccharose oder Raffinose umfasst. Unter Zellleim wird insbesondere ein quellfähiger und lösbarer Faserstoff verstanden, dessen molekulare Struktueeinheit ein Glucosedimer darstellt. Unter Sulfitablauge wird insbesondere ein ligninsulfonsäurehaltiges Abprodukt der Zellstoffgewinnung verstanden. Unter organischen Bindemitteln werden Bindemittel mit organischen Anteilen verstanden. Als besonders vorteilhaft haben sich modifizierte Stärken und/oder Zellulosen erwiesen.

Der Einsatz eines oder mehrerer dieser Bindemittel hat sich als besonders vorteilhaft erwiesen. Besonders bevorzugt ist hier der Einsatz von Stärke und generell von in Wasser lös-, quell- und dispergierbaren Bindemitteln.

Gemäß einer weiteren vorteilhaften Ausgestaltung des erfindungsgemäßen Verfahrens liegt der Quotient aus der Masse des in Schritt 1.a eingesetzten Bindemittels zur Masse der Endmischung nach Schritt 1.d, das heißt der gegebenenfalls befeuchteten Endmischung, im Bereich von 0,01 bis 0,05.

Folglich hat das Bindemittel einen Anteil an der befeuchteten Endmischung im Bereich von 1 bis 5 Gew.-%. Es ist also bei dem erfindungsgemäßen Verfahren möglich, mit sehr geringen Mengen von Bindemitteln zu arbeiten, um so den Einfluss des Bindemittels auf den Heizwert, die Verbrennungseffizienz, die Verbrennungsführung und die Abgaszusammensetzung möglichst gering zu halten.

Gemäß einer weiteren vorteilhaften Ausgestaltung des erfindungsgemäßen Verfahrens wird die erste Menge Wasser so festgelegt, dass das Bindemittel am ersten Brennstoff fixiert wird.

Es wird also in dieser Ausgestaltung des erfindungsgemäßen Verfahrens gerade so viel Wasser zugegeben, dass es nicht zu einem vollständigen Aufquellen oder Lösen des Bindemittels kommt, sondern dass dieses - üblicherweise trocken und ggf. pulver- oder granulatförmig eingesetzte Bindemittel - am ersten Brennstoff anhaftet. Durch die Bereitstellung einer möglichst kleinen Körnung des Bindemittels und kleiner Körnungen bzw. Korngrößen des ersten Brennstoffs und die Zugabe von fein verteiltem Wasser in Schritt 1.b kann eine möglichst homogene Mischung aus erstem Brennstoff, Bindemittel und Wasser erreicht werden. Diese Vormischung in befeuchtetem Zustand kann besonders vorteilhaft weiter gemischt und verarbeitet werden.

Gemäß einer weiteren vorteilhaften Ausgestaltung des erfindungsgemäßen Verfahrens wird die zweite Menge Wasser so festgelegt, dass das Bindemittel aktiviert wird.

Eine Aktivierung des Bindemittels in und nach Schritt 1.c, welche besonders bevorzugt durchgeführt wird, während die Endmischung gemischt wird, führt zu einer bindefähigen Endmischung, die beim Pressen in Schritt 1.d zu festen, lager- und transportstabilen Brennstoffformkörpern verpresst wird.

Gemäß einer weiteren vorteilhaften Ausgestaltung des erfindungsgemäßen Verfahrens wird mindestens eine der ersten und der zweiten Menge Wasser in Tropfenform mit einer mittleren Tropfengröße von weniger als 10 µm zugegeben.

Besonders bevorzugt ist sogar der Einsatz einer mittleren Tropfengröße von weniger als 5 µm oder auch von weniger als 2 µm. Die Zugabe von Wasser in fein verteilter Form führt dazu, dass es zu einer über das Volumen der Mischungen betrachtet gleichmäßigen Benetzung mit Wasser und damit zu einem gleichmäßigen Fixieren des Bindemittels am ersten Brennstoff und/oder Aktivierung des Bindemittels in der Endmischung kommt. So wird erreicht, dass die Bindemittelkonzentration über die Endmischung relativ gleichmäßig ist und es zu einer gleichbleibenden Qualität der erzeugten Brennstoffformkörper kommt.

Im Folgenden soll die Erfindung anhand der einzigen beigefügten Figur näher erläutert werden, ohne dass sie auf das dort gezeigte Ausführungsbeispiel beschränkt wäre.

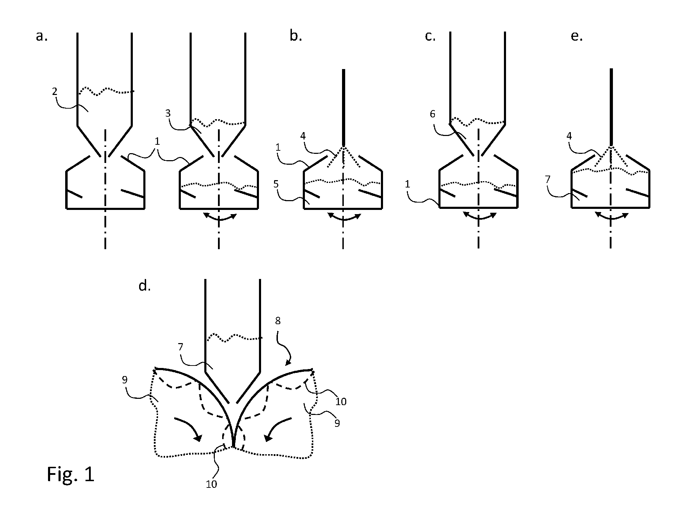

Die einzige Fig. 1 zeigt schematisch ein Ausführungsbeispiel des erfindungsgemäßen Verfahrens mit den Verfahrensschritten a. bis e. In Schritt a. wird einem Mischer 1 zunächst ein erster Brennstoff 2 zugegeben. Unter Drehung des Mischers 1 wird dann trockenes, pulverförmiges Bindemittel 3 in den Mischer 1 gegeben. Nach dem Trockenmischen, also ohne Zugabe von Wasser, haben sich der granulare erste Brennstoff 2, der beispielsweise Braunkohlen- oder Steinkohlen-Staub und/oder Holzspäne umfasst, vermischt. Daran anschließend wird in Schritt b. Wasser 4 zugegeben, dieses wird unter Rotation des Mischers 1 mit dem ersten Brennstoff 2 und dem Bindemittel 3 zu einer Vormischung 5 vermischt. Diese Vormischung 5 ist bereits befeuchtet. Der befeuchteten Vormischung 5 wird dann während des Betriebs des Mischers 1 kontinuierlich oder diskontinuierlich zweiter Brennstoff 6 zugegeben, bis insgesamt eine zweite Menge des zweiten Brennstoffs 6 zugegeben wurde. Hierbei befindet sich der Mischer 1 im Einsatz, so dass eine Endmischung 7 entsteht. Hierbei ist es bevorzugt, dass der zweite Brennstoff 6 in Schritt c. kontinuierlich in kleinen Dosen zugegeben wird, um eine möglichst homogene Durchmischung der Endmischung 7 zu gewährleisten. Daran anschließend erfolgt im Schritt e. die Zugabe einer zweiten Menge Wasser 4 zum Befeuchten der Endmischung 7. Diese befeuchtete Endmischung 7 wird in Schritt d. in eine Walzenpresse 8 gegeben. Diese besteht aus zwei Walzen 9, die eine Vielzahl von Mulden 10 aufweisen, die im Zusammenwirken die Form des Brennstoffformkörpers vorgeben.

In einem ersten Beispiel wurden Verbundbriketts aus Trockenbraunkohle und Holzhackschnitzeln hergestellt. Hierzu wurden 15 Gew.-% Holzspäne einer Korngröße von 0 bis1,6 mm und mit einem Wasseranteil von 10 Gew.-% als erster Brennstoff 2 und 5 Gew.-% Stärkepulver als Bindemittel 3 trockengemischt. Es handelte sich hierbei um raffinierte Stärke. Nach der Vormischung wurden 5 Gew.-% Wasser aufgesprüht. Die hier angegebenen Gew.-% beziehen sich hierbei auf die erreichte Endmasse der Endmischung 7. Danach wurde langsam, insbesondere im kontinuierlichen Mengenstrom von 1,25% pro Sekunde 75 Gew.-% Trockenbraunkohle einer Korngröße von 0 bis 2 mm mit einem Wassergehalt von 10 Gew.-% als zweiter Brennstoff 6 in den Mischer 1 gegeben und so der Vormischung 5 hinzugefügt. Hierbei rotierte der Mischer 1. Aufgrund der Wassergehalte des ersten 2 und zweiten Brennstoffs 6 musste keine zweite Menge Wasser 4 aufgesprüht werden. Die Gesamtmischdauer betrug 3 min.

Diese rieselfähige Endmischung 7 wurde einer Formmuldenwalzenpresse mit Hilfe einer Stopfschnecke aufgegeben und unter Anwendung einer Anpresskraft von 60 bis 70 kN/cm brikettiert. Das entstehende Brikett hat eine Punktdruckfestigkeit von 7 bis 9 Megapascal, eine Rohdichte von 1,17 bis 1,18 g/cm³ und eine Abriebfestigkeit nach Industriestandard von 85 bis 90 %.

In einem zweiten Beispiel wurden Verbundbriketts aus Trockenbraunkohle und Anthrazit hergestellt. Zunächst wurden 15 Gew.-% Anthrazit einer Korngröße von 0 bis1 mm und einem Wassergehalt von etwa 0 % als erster Brennstoff 2 und 5 Gew.-% Stärkepulver als Bindemittel 3 vorgemischt. Danach wurden 3,33 Gew.-% Wasser aufgesprüht und dann unter Mischen langsam über eine nZeitraum von ca. 1 Minute 70 Gew.-% Trockenbraunkohle einer Korngröße von 0 bis 2 mm und einem Wassergehalt von 10 % als zweiter Brennstoff 6 zum Vorgemisch in den Mischer 1 hinzugefügt. Danach wurden 6,66 Gew.-% Wasser zur Endmischung zur Befeuchtung zugegeben. Die Gesamtmischdauer betrug auch hier 3 min.

Die rieselfähige Endmischung wurde einer Formmuldenwalzenpresse mit Hilfe einer Stopfschnecke aufgegeben und unter Anwendung einer spezifischen Anpresskraft von 70 bis 80 kN/cm brikettiert. Die Briketts haben eine Punktdruckfestigkeit von 2 Megapascal und eine Rohdichte von 1,22 bis 1,23 g/cm³ und eine Abriebfestigkeit nach Industriestandard von etwa 80 %.

Das erfindungsgemäße Verfahren eignet sich zur Herstellung von Festbrennstoffformkörpern auch aus grundsätzlich nach herrschender Meinung schlecht brikettierbaren Materialien. Durch die Zugabe eines geringen Bindemittelanteils und unter Anwendung eines speziellen Mischregimes können Brennstoffformkörper oder Briketts erzeugt werden, die auch bei Einsatz einer Walzenpresse 8 lager- und transportfähig sind.

### Bezugszeichenliste

- 1: Mischer
- 2: erster Brennstoff
- 3: Bindemittel
- 4: Wasser
- 5: Vormischung
- 6: zweiter Brennstoff
- 7: Endmischung
- 8: Walzenpresse
- 9: Walzen
- 10: Mulde

## Patentansprüche

1. Verfahren zum Herstellen von Brennstoffformkörpern, umfassend die folgenden Schritte:
a. Trockenmischen einer ersten Menge eines ersten Brennstoffs (2) mit einem Bindemittel (3) zur Erstellung einer Vormischung (5);
b. Zugeben einer ersten Menge Wasser (4) zur Befeuchtung der Vormischung (5);
c. Mischen der befeuchteten Vormischung (5) bei gleichzeitiger Zugabe eines zweiten Brennstoffs (6), bis eine zweite Menge des zweiten Brennstoffs (6) zugegeben wurde zur Erstellung einer Endmischung (7); und
d. Pressen der befeuchteten Endmischung (7) zu Brennstoffformkörpern.

2. Verfahren nach Anspruch 1, bei dem nach Schritt 1.c und vor Schritt 1.d eine zweite Menge Wasser (4) zur Befeuchtung der Endmischung (7) zugegeben wird.

3. Verfahren nach einem der vorhergehenden Ansprüche, bei dem Schritt 1.d in einer der folgenden Pressen ausgeführt wird:
A. einer Stempelpresse und
B. einer Walzenpresse (8).

4. Verfahren nach einem der vorhergehenden Ansprüche, bei dem der erste Brennstoff (2) mindestens einen der folgenden Stoffe umfasst:
I. Holz;
II. Steinkohle;
III. Anthrazit;
IV. Braunkohle;
V. Xylit;
VI. pflanzliche Fasern;
VII. Holzkohle;
VIII. Feinkoks aus Steinkohle und Braunkohle;
IX. Schwelkoks aus Steinkohle und Braunkohle

5. Verfahren nach einem der vorhergehenden Ansprüche, bei dem der zweite Brennstoff (6) Braunkohle umfasst.

6. Verfahren nach einem der vorhergehenden Ansprüche, bei dem der erste (2) und der zweite Brennstoff (6) identisch sind.

7. Verfahren nach einem der vorhergehenden Ansprüche, bei dem das Bindemittel (3) mindestens einen der folgenden Stoffe umfasst:
i. Stärke;
ii. Melasse;
iii. Zellleim;
iv. Sulfitablauge; und
v. organische Bindemittel.

8. Verfahren nach einem der vorhergehenden Ansprüche, bei dem der Quotient aus der Masse des in Schritt 1.a eingesetzten Bindemittels (2) zur Masse der Endmischung (7) nach Schritt 1.c im Bereich von 0,01 bis 0,05 liegt.

9. Verfahren nach einem der vorhergehenden Ansprüche, bei dem die erste Menge Wasser (4) so festgelegt wird, dass das Bindemittel (2) am ersten Brennstoff (2) fixiert wird.

10. Verfahren nach einem der Ansprüche 2 bis 9, bei dem die zweite Menge Wasser (4) so festgelegt wird, dass das Bindemittel (2) aktiviert wird.

11. Verfahren nach einem der vorhergehenden Ansprüche, bei dem mindestens eine der ersten und der zweiten Menge Wasser (4) in Tropfenform mit einer mittleren Tropfengröße von weniger als 10 µm [Mikrometer] zugegeben wird.
